# FASCICULE DE BREVET EUROPEEN

(11) **EP 2 537 694 B1**
(45) Date de publication et mention de la délivrance du brevet: **06.08.2014**
(21) Numéro de dépôt: 12168136.5
(22) Date de dépôt: 15.05.2012
(51) Int. Cl.: B60J 10/04

(54) **Elément de finition regroupant un enjoliveur d'encadrement d'ouvrant et un gousset**
Abschlusselement, das aus einem Zierrahmen für ein Öffnungselement und einem Eckblech besteht
Finishing element comprising a door frame cover and a gusset

(30) Priorité: 24.06.2011 FR 1155615
(43) Date de publication de la demande: 26.12.2012
(73) Titulaire: PEUGEOT CITROËN AUTOMOBILES SA, 78140 Velizy-Villacoublay (FR)
(72) Inventeur: Demougeot, Damien, 25150 ECOT (FR)

(56) Documents cités:
- WO-A1-2011/062143
- FR-A1- 2 916 687
- JP-A- 2011 005 966

## Description

L'invention a trait aux éléments de finition. Plus particulièrement l'invention a trait aux éléments de finition d'ouvrants. Plus particulièrement encore l'invention a trait aux éléments de finition de portes arrière. Plus particulièrement encore l'invention a trait aux éléments de finition de portes arrière placés au voisinage de vitres, et qui sont montés à l'extérieur du véhicule. L'invention a également trait à un véhicule équipé d'un tel dispositif.

De manière répandue les véhicules automobiles ont des ouvrants munis de vitres qui peuvent s'ouvrir en effectuant une translation verticale vers le bas. Au cours de cette translation la vitre vient se loger dans une cavité aménagée dans l'ouvrant, dans une sorte de caisson situé dans la partie généralement inférieure de l'ouvrant. Dans certaines configurations, le volume balayé par la vitre lors de sa translation est supérieur à l'espace disponible. C'est le cas lorsqu'un bord vertical inférieur d'un ouvrant est particulièrement incliné, lorsque par exemple un bord d'ouvrant est au voisinage d'une roue et doit le contourner. L'espace pour permettre le coulissement de la vitre n'est pas assez large pour l'accueillir sur une course souhaitée. Dans ce cas la vitre ne peut pas être présente sur toute la largeur de l'ouvrant et doit avoir une largeur significativement inférieure à celle de la porte sur laquelle elles sont montées.

Suite à cet aménagement il reste donc un espace entre le bord de la vitre et le cadre de l'ouvrant. Pour obturer cet espace non occupé on place un gousset. Ce gousset a une fonction de finition, d'étanchéité et doit être suffisamment robuste pour garantir l'inviolabilité du véhicule.

Au voisinage de cette pièce se montent également des joints assurant l'étanchéité à l'air et à l'eau du véhicule. Ils doivent assurer leur fonction malgré les pressions ou dépressions engendrées par le déplacement et la vitesse du véhicule. Cette pièce assure une fonction de remplissage et vient au contact de la vitre et du châssis de la porte. Elle permet aux joints de réaliser convenablement leur fonction. Sa géométrie doit offrir une continuité avec la vitre pour ne pas créer de discontinuité marquée. En roulage une discontinuité génère des perturbations dans l'écoulement de l'air ; ce qui provoque des sifflements d'autant plus audibles que la vitesse augmente.

Au voisinage du gousset se trouve également un enjoliveur d'encadrement de vitre qui permet d'accueillir la vitre et de la guider dans sa translation. L'enjoliveur peut éventuellement être directement en contact de la vitre ou par l'intermédiaire d'un profilé souple rapporté tel une coulisse. L'enjoliveur constitue une pièce de finition puisqu'il est visible de l'extérieur. L'enjoliveur se fixe par exemple sur une nervure du cadre d'un ouvrant et sert de support pour la fixation de joints. L'enjoliveur revêt alors une fonction d'élément structurant et de finition.

L'enjoliveur se présente sous la forme d'un profilé en contact linéaire avec le gousset. La jonction entre ces deux éléments représente une discontinuité qui peut nuire au bon écoulement de l'air sur leur surface extérieure. Cette discontinuité peut provoquer des phénomènes de sifflement évoqués précédemment. Cette discontinuité représente un aspect qui réduit la qualité perçue. La fixation de l'enjoliveur doit être ferme et limiter les opérations de montages.

Au niveau de la liaison on crée une interface qui peut être le lieu de jeux mécaniques qui s'amplifient avec le temps. Ces jeux permettent des mouvements relatifs et éventuellement des vibrations audibles. Cette interface constitue une faille dans l'étanchéité de l'ensemble du véhicule. Cette faille peut constituer une voie d'eau et laisser passer un fluide dans le corps de l'ouvrant. Avec le temps, le vieillissement de matériaux amplifie l'impact des inconvénients.

La présence du gousset qui est incontournable augmente le nombre de pièces à monter et complique les procédés de montage et d'ajustement. Ce fait va à l'opposé de la logique industrielle, ou l'on souhaite limiter le nombre d'opérations de montage et dans la mesure du possible les simplifier.

En un point se chevauchent la vitre, la coulisse et le gousset. Ce point comporte des contraintes de taille : il doit être étanche et résistant, tout en respectant une certaine épaisseur bien que certaines pièces se recouvrent. L'insertion de coulisses ou de joints est problématique à cause de l'épaisseur des différents constituants. La pluralité d'interfaces crée un point faible au point de vue étanchéité et solidité.

En termes de durabilité et éventuellement d'esthétique on souhaite être libre de choisir des textures et matériaux variés. Les composants doivent à la fois être résistants mécaniquement et offrir une durabilité adéquate face aux contraintes chimiques ou à l'exposition aux UV.

Le document EP1 232 887 A2 divulgue un châssis de porte métallique comprenant un cadre métallique, une coulisse de vitre, un joint assurant une étanchéité entre l'ouverture de la porte et le cadre métallique et un élément moulé destiné à habiller le cadre métallique au niveau de sa nervure externe. L'élément permet de recouvrir les parties structurantes et les étanchéités et offre une planéité avec la vitre améliorée.

Le document FR2916687 divulgue un élément d'habillage de vitre pour véhicule automobile. Cet élément d'habillage est destiné à être monté sur une porte comprenant une vitre coulissante et une vitre fixe. Cet élément d'habillage comprend une plaque visible de l'extérieur et un moyen d'appui permettant de recevoir des moyens de serrage pour la fixation. La forme de l'élément d'habillage couplée aux moyens de serrage permettent de plaquer une protubérance de l'élément d'habillage contre la vitre afin d'assurer une étanchéité requise.

Ces documents présentent des solutions d'enjoliveurs qui habillent les cadres d'ouvrants. Ils permettent d'intégrer des dispositifs de joints. Cependant ils n'intègrent pas de goussets. Leur configuration ne permet pas une jonction optimale avec un gousset. Dans ces configurations, l'adjonction d'un gousset complique le montage et peut présenter des points faibles.

Le document WO 2011/062143 A1 divulgue un élément de finition selon le préambule de la revendication 1.

L'invention a pour objectif de proposer un élément de finition pour véhicule automobile permettant de couvrir des parties de carrosseries, d'offrir une fonction de support aux joints et d'occulter des ouvertures. L'invention a également pour objectif de proposer un élément de finition qui garantit une robustesse face à une intrusion extérieure. L'invention a également pour but de maîtriser les discontinuités autour du gousset, et de maîtriser l'impact des points faibles. L'élément de finition doit être simple à monter et limiter les opérations de montage et d'ajustement. En outre, l'élément de finition doit permettre d'offrir une large gamme de matériau et de finition.

L'invention a pour objet un élément de finition d'ouvrant de véhicule, l'ouvrant comprenant un cadre dans lequel se loge une vitre, l'élément de finition comprenant un enjoliveur d'encadrement destiné à être monté sur le cadre de l'ouvrant, remarquable en ce que l'élément de finition comprend un gousset de cadre d'ouvrant, le gousset et l'enjoliveur d'encadrement étant d'un seul tenant.

Le gousset est destiné à être logé dans et contre le cadre de l'ouvrant. Plus particulièrement, il est configuré pour couvrir un espace entre une partie inférieure et arrière du cadre et une partie supérieure et arrière du volume de l'ouvrant servant de logement à la vitre.

Selon un mode avantageux de l'invention, l'élément de finition est réalisé par bi-injection et reçoit un habillage en PMMA et a préférentiellement un corps en ABS.

Selon un encore autre mode avantageux de l'invention, l'épaisseur du surmoulage en PMMA est supérieure à 0,20 mm ; préférentiellement supérieure à 0,50 mm ; encore plus préférentiellement supérieure à 1.00 mm; encore plus préférentiellement supérieure à 2,00 mm.

Selon l'invention, l'enjoliveur d'encadrement comprend des moyens de fixations s'étendant le long de l'enjoliveur d'encadrement de manière à pouvoir recevoir une nervure du cadre sur laquelle l'enjoliveur d'encadrement est destiné à être monté, les moyens de fixation étant disposés de part et d'autre de la nervure et s'étendant préférentiellement généralement parallèlement les uns aux autres. Ces moyens de fixation sont préférentiellement d'un seul tenant avec l'enjoliveur d'encadrement. Ils peuvent s'étendre de manière continue ou discontinue le long de l'enjoliveur. Ils forment une rainure destinée à recevoir la nervure.

Selon un autre mode avantageux de l'invention, les moyens de fixation comprennent des pattes de fixation disposées le long de l'enjoliveur d'encadrement et alternativement de part et d'autre de la nervure du cadre sur laquelle l'enjoliveur d'encadrement est destiné à être monté. Préférentiellement, les pattes sont disposées en quinconce.

Selon un encore autre mode avantageux de l'invention, les moyens de fixation disposés d'un côté de la nervure du cadre sur laquelle l'enjoliveur d'encadrement est destiné à être monté comprennent un ou plusieurs orifices aptes à coopérer par contact positif avec des moyens de fixation correspondants de la nervure. Il s'agit préférentiellement exclusivement des moyens de fixation disposés d'un premier côté de la nervure, le premier côté étant préférentiellement le côté avant correspondant à celui de la vitre.

Selon l'invention, les moyens de fixation disposés d'un côté de la nervure du cadre sur laquelle l'enjoliveur d'encadrement est destiné à être monté comprennent une surface profilée comprenant une première portion destinée à venir en contact avec la nervure et une deuxième portion apte à former avec la nervure une cavité, destinée à la fixation d'un profilé d'étanchéité, la deuxième portion 38 de la surface profilée comprenant préférentiellement une surface à contact positif dans le sens de sortie de la cavité. Il s'agit préférentiellement exclusivement des moyens de fixation disposés d'un second côté de la nervure, le second côté étant préférentiellement le côté arrière opposé à la vitre.

Selon un encore autre mode avantageux de l'invention, l'enjoliveur d'encadrement comprend une face cachée opposée à une partie visible de l'extérieur de l'élément de finition une fois monté sur l'ouvrant, avec un talon s'étendant longitudinalement sur la face cachée, le talon réalisant une butée qui combinée avec la deuxième portion à contact positif de la surface profilée permet la fixation d'un profilé logé entre le talon, les moyens de fixation et la face cachée.

L'invention a également pour objet un ouvrant de véhicule automobile, comprenant un cadre dans lequel se loge une vitre, et un élément de finition, remarquable en ce que l'élément de finition est conforme à l'invention, et en ce que l'ouvrant est une porte ; préférentiellement une porte arrière; l'élément de finition est préférentiellement positionné à l'arrière de la vitre.

Selon un mode avantageux de l'invention, le cadre de l'ouvrant est réalisée en tôle présentant une nervure dans laquelle sont ménagés des moyens de fixation aptes à coopérer par contact positif avec des orifices correspondants de l'élément de finition, préférentiellement la nervure étant sensiblement orientée perpendiculairement au plan de la vitre.

Selon un autre mode avantageux de l'invention, les moyens de fixation comprennent au moins une portion de la nervure partiellement découpée et déformée, la découpe étant préférentiellement en forme générale de U avec l'ouverture du U opposée au sens de montage.

L'invention a également pour objet un véhicule comprenant un ouvrant de véhicule automobile, remarquable en ce que l'ouvrant est conforme à l'invention.

L'invention permet de réunir le gousset et la coulisse de vitre. Cette réunion permet de supprimer une interface. Cet ensemble est plus résistant et plus étanche que l'art antérieur. Cette conception offre plus de possibilités de réaliser des formes souhaitées et notamment de réaliser une continuité parfaite entre les deux éléments ce qui supprime les turbulences et création de sifflements. Les points faibles sont maîtrisés.

Le montage de cet ensemble est simplifié: en une opération on monte deux pièces contre une seule auparavant. La réalisation de cette pièce peut être réalisée par bi-injection ce qui offre un plus grand choix de finitions tout en garantissant une résistance mécanique adéquate. Cette solution offre des avantages économiques sur plusieurs tableaux.

Les moyens de fixation de l'élément de finition sont également très avantageux en raison de leur simplicité et coût de réalisation ainsi que de leur facilité de montage. En effet, la présence des moyens de part et d'autre de la nervure du cadre de porte permet une fixation stable. L'alternance des pattes de part et d'autre de la nervure permet une insertion avec effort réduit tout en assurant une fixation satisfaisante. La réalisation d'orifices dans les pattes est particulièrement simple et économique. Il en va de même pour la réalisation des moyens correspondant sur la nervure du cadre. Ils permettent un montage par simple clipsage tout en étant particulièrement rétentifs.

D'autres caractéristiques et avantages de la présente invention seront mieux compris à l'aide de la description et des dessins parmi lesquels :
- La figure 1A est une représentation d'un véhicule de profil.
- La figure 1B est un agrandissement de la figure 1A centré sur un gousset de porte arrière.
- La figure 2 est un agrandissement de la figure 1B représentant un élément de finition selon l'invention.
- La figure 3A est une vue en perspective de la coupe suivant l'axe AA de l'élément de finition tel que défini sur la figure 2.
- La figure 3B est une vue en plan de la coupe suivant l'axe AA de l'élément de finition tel que défini sur la figure 2.
- La figure 4A est une vue en perspective de la coupe suivant l'axe BB de l'élément de finition tel que défini sur la figure 2.
- La figure 4B est une vue en plan de la coupe suivant l'axe BB de l'élément de finition tel que défini sur la figure 2.
- La figure 5 est une coupe suivant l'axe BB de l'élément de finition tel que défini sur la figure 2 illustrant le positionnement des joints.

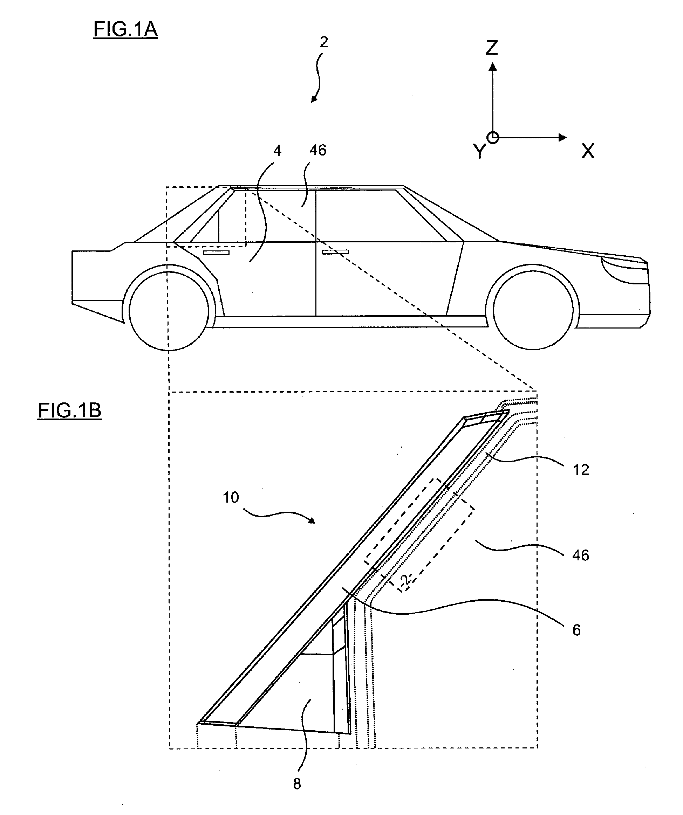

La figure 1A présente un véhicule automobile 2. Ce véhicule automobile 2 comporte plusieurs ouvrants, dont des portes 4 permettant au conducteur ou aux passagers d'accéder au véhicule 2. Les portes sont munies de vitres 46. Ces vitres 46 sont ouvrables lors d'une manoeuvre de translation vers le bas du véhicule. L'ouvrant 4 de véhicule comprend un cadre 12 dans lequel se loge la vitre.

Sur la figure est représenté un trièdre X, Y, Z à partir de ce trièdre on définit les directions relatives au véhicule. On appelle la direction longitudinale un axe orienté suivant l'axe X du trièdre. On nomme la direction transversale un axe orienté suivant l'axe Y du trièdre. Cet axe est perpendiculaire au plan de la figure 1A. On désigne par la direction verticale un axe orienté suivant l'axe Z du trièdre. On définit également à partir du véhicule des orientations intérieure et extérieure.

Sur cette figure 1A est représenté un rectangle centré sur une porte arrière, plus précisément centré sur la partie arrière du cadre 12 de la porte 4.

La figure 1B présente un agrandissement du rectangle tracé sur la figure 1A. Sur cette figure est représenté l'élément de finition 10. L'élément de finition 10 comprend un enjoliveur d'encadrement 6. Cet enjoliveur d'encadrement 6 est relativement plan ou strictement plan. L'enjoliveur d'encadrement 6 a une forme allongée. L'enjoliveur d'encadrement 6 peut éventuellement être légèrement cintré. La forme de l'enjoliveur d'encadrement 6 est sensiblement celle d'un quadrilatère du genre rectangle ou parallélogramme. L'enjoliveur d'encadrement 6 est visible de l'extérieur, pour cette raison sa finition doit être soignée et ses cotes scrupuleusement respectées. L'enjoliveur d'encadrement 6 est destiné à être monté sur le cadre 12 de l'ouvrant 4. L'enjoliveur d'encadrement 6 réalise en partie ou totalement la fonction de coulisse de vitre 46 car il peut participer au guidage de la vitre. Il peut être directement au contact de la vitre 46 ou recevoir un profilé intermédiaire type joint ou joint renforcé à feutre qui constitue une véritable coulisse de vitre.

L'invention est remarquable par le fait que l'élément de finition 10 regroupe l'enjoliveur d'encadrement 6 et un gousset 8 en une seule et même pièce mécanique. Le gousset 8 et l'enjoliveur d'encadrement 6 sont d'un seul tenant. Le gousset 8 est réalisé dans le prolongement latéral de l'enjoliveur d'encadrement. La direction du prolongement découle d'un élargissement de l'enjoliveur d'encadrement 6. Cet élargissement peut être local ou sur toute la hauteur de l'enjoliveur d'encadrement 6. Éventuellement, le plan de la surface extérieure du gousset 8 peut être décalé par rapport à l'enjoliveur d'encadrement 6 vers l'intérieur ou l'extérieur.

Le gousset 8 a une forme sensiblement triangulaire. Alternativement le gousset 8 peut avoir une forme de quadrilatère. Le gousset 8 présente une base qui est un côté sensiblement horizontal. La base du gousset 8 est sensiblement perpendiculaire à la direction principale de l'enjoliveur d'encadrement 6. L'enjoliveur d'encadrement peut être incliné par rapport à la direction verticale. Dans ce cas la base du gousset 8 décrit un angle avec l'enjoliveur d'encadrement 6.

L'enjoliveur d'encadrement 6 et le gousset 8 ont un corps en ABS. Le corps est positionné vers l'intérieur du véhicule 2. L'appellation ABS désigne l'acrylonitrile butadiène styrène. Ce matériau est particulièrement résistant mécaniquement pour un polymère. Sa résilience est également appréciable dans le domaine automobile. Sa mise en oeuvre est aisée par moulage et permet de fabriquer des formes complexes telles des pattes de fixation. La résistance de l'ABS est avantageuse pour la réalisation de pattes de fixations (qui seront détaillées plus loin) coopérant avec des dispositifs de maintien en position.

L'élément de finition 10 peut cependant être réalisé à partir de plusieurs matériaux. L'élément de finition 10 est réalisé par un procédé de bi-injection. Le corps en ABS de l'enjoliveur d'encadrement 6 et du gousset 8 reçoit un habillage en PMMA. L'habillage 16 est positionné vers l'extérieur du véhicule 2. La désignation PMMA correspond au polyméthacrylate de méthyle. Il s'agit d'un thermoplastique transparent dont le monomère est le méthacrylate de méthyle (MAM). Il peut être pigmenté dans la masse et présenter une teinte souhaitée. Grâce à ses qualités on peut réaliser des pièces très lisses et très soignées ce qui permet d'augmenter la qualité perçue d'un véhicule 2 sur lequel il est utilisé. Le PMMA présente une résistance intéressante aux ultraviolets et aux produits chimiques, ce qui est un gage de durabilité pour un élément de finition 10.

Le PMMA est cependant fragile et cassant. Il convient donc de le renforcer à l'aide d'un autre matériau. C'est le choix qui est ici retenu.

Le choix des deux matériaux permet de marier leurs avantages et de créer une synergie pour avoir un rendu et une résistance optimale.

Sur la figure 1B est également tracé un rectangle centré sur l'interface de l'enjoliveur d'encadrement 6 et du cadre 12 de l'ouvrant.

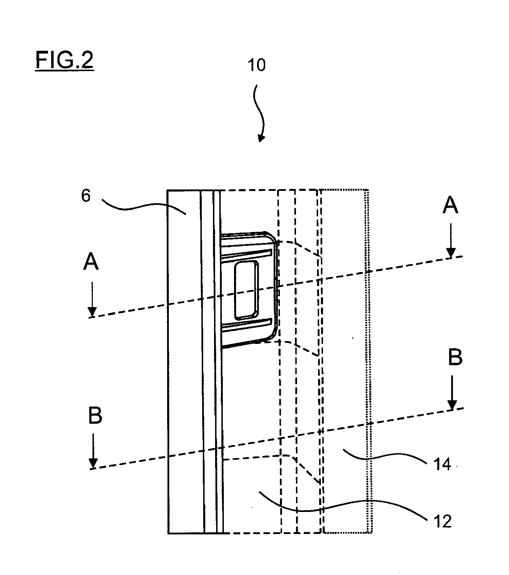

La figure 2 est un agrandissement du rectangle tracé sur la figure 1B. Cette figure présente l'enjoliveur d'encadrement 6 et une portion du cadre 12 sur lequel elle est montée. L'enjoliveur d'encadrement 6 est positionné vers l'extérieur du véhicule par rapport au cadre 12. La figure 2 présente également un habillage 14 venant recouvrir le cadre 12. L'habillage 14 est positionné vers l'intérieur du véhicule 2 par rapport au cadre 12.

L'enjoliveur d'encadrement 6 comprend un axe principal. L'enjoliveur d'encadrement 6 présente un grand côté qui a une grande longueur. L'axe principal est orienté suivant son grand côté, suivant le grand axe du quadrilatère. Une des fonctions de l'enjoliveur d'encadrement 6 est de recouvrir une branche du cadre 12 de l'ouvrant 4. L'enjoliveur d'encadrement 6 a une fonction d'habillage esthétique et permet un raccord surfacique avec la vitre 46 à côté de laquelle elle est montée.

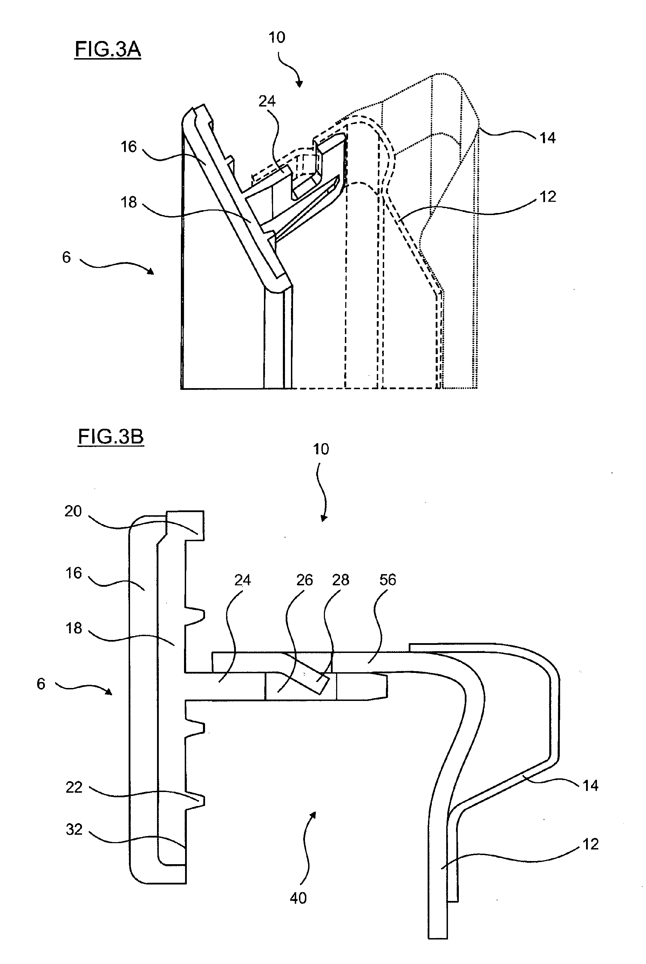

La figure 3A permet de visualiser la face visible 16. La face visible est orientée vers l'extérieur du véhicule 2.

L'élément de finition 10 comprend des moyens de fixations 24, 30. Ces moyens de fixation sont représentés sur les figures 2, 3A, 3B, 4A, 4B. Les moyens de fixations 24, 30 s'étendent sous la face visible 16 de l'enjoliveur d'encadrement 6 et forment des pattes de fixation 24, 30. Ces pattes de fixation 24, 30 sont disposées le long de l'enjoliveur d'encadrement 6 alternativement de part et d'autres de la nervure 56 du cadre 12 sur laquelle l'enjoliveur d'encadrement 6 est monté. Cette caractéristique permet aux pattes de fixation 24, 30 de venir se positionner de part et d'autre de la nervure et donc de générer un calage de la pièce suivant un axe.

Les pattes de fixation 24, 30 ont des formes sensiblement rectangulaires. Les pattes de fixation 24, 30 sont positionnées relativement perpendiculairement à la face cachée 32 de l'enjoliveur d'encadrement 6. On précise que la face cachée 32 de l'enjoliveur d'encadrement 6 est orientée vers l'intérieur du véhicule 2. À l'opposé, la face visible est orientée vers l'extérieur du véhicule 2. Pour les rigidifier on peut disposer des équerres de renfort entre les pattes de fixation 24, 30 et la face cachée 32.

Comme cela est visible à la figure 3B, les pattes de fixation 24 disposées du côté avant, c'est-à-dire du côté vitre, comprennent des orifices destinés à coopérer avec des ergots correspondants 28 de la nervure 56. Cet aspect de l'invention permet de pouvoir clipser rapidement l'élément de finition 10 sur un support, d'offrir une rétention et un plaquage de finition 10 sur son support. L'opération de montage est simple, ne nécessite pas d'outil ni d'adhésif. Les réglages sont simples et les opérations d'ajustement limitées.

L'ouvrant 4 est réalisé en tôles métalliques embouties. Ces tôles sont ensuite assemblées par soudage ou clinchage ou tout autre mode de fixation approprié. Les tôles peuvent être en acier, en aluminium ou tout autre alliage adéquat. La structure peut également comprendre des polymères, des matériaux composites. Le cadre 12 est préférentiellement réalisé suivant le même procédé que l'ouvrant 4.

Le cadre 12 de l'ouvrant 4 est réalisé en tôle présentant une nervure 56. Dans la nervure 56 sont ménagés des moyens de fixation 28 aptes à coopérer par contact positif avec des orifices correspondants de l'élément de finition 10. Préférentiellement la nervure 56 est sensiblement orientée perpendiculairement au plan de la vitre 46. Cette particularité facilite la mise en place de l'élément de finition depuis l'extérieur du véhicule.

Les moyens de fixation 28 de la nervure 56 comprennent au moins une portion de ladite nervure, partiellement découpée et déformée. La découpe de la portion de la nervure 56 est préférentiellement en forme générale de U avec l'ouverture du U opposée au sens de montage. Les dispositifs de fixation 28 en forme de U peuvent par exemple prendre la forme de pattes de fixation souples aptes à coopérer avec un orifice 26. La forme de U désigne une forme allongée. Les dispositifs de fixation sont réalisés à même la tôle des nervures 56. Ils sont réalisés par découpe de la tôle puis déformation de la tôle ou poinçonnage. Ainsi réalisés, ils procurent une rétention d'une patte de fixation 24 dans laquelle est engagé un dispositif de fixation 28.

La nervure 56 est sensiblement orientée perpendiculairement au plan de l'enjoliveur d'encadrement 6.

La face cachée 32 de l'enjoliveur d'encadrement présente des surépaisseurs 20, 22. Ces surépaisseurs 20, 22 sont longitudinales. Elles peuvent avoir une longueur égale à celle de l'enjoliveur d'encadrement 6, ou constituer des segments entrecoupés. Parmi les surépaisseurs 20, 22 on distingue un talon 20 et un ou plusieurs renflements 22.

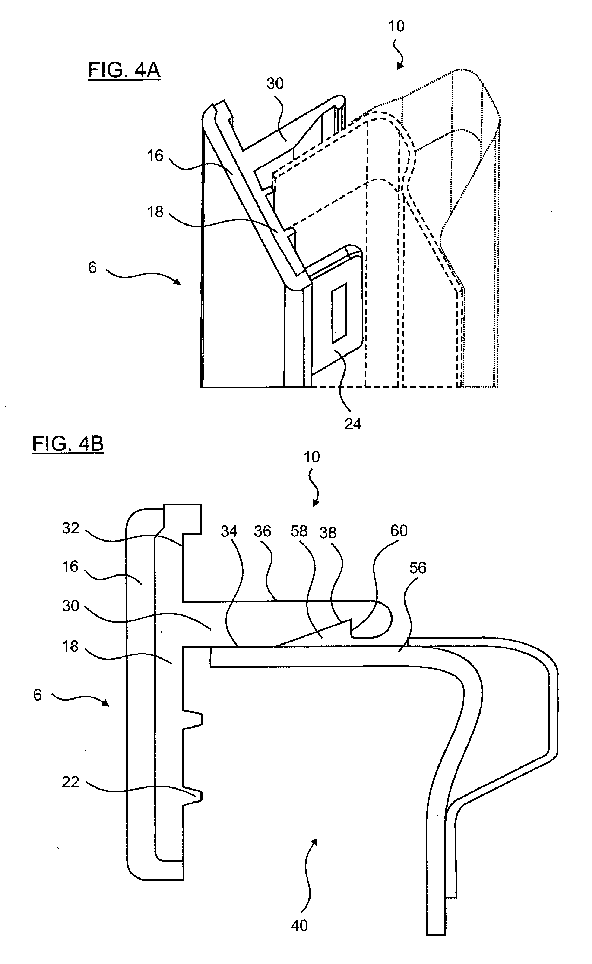

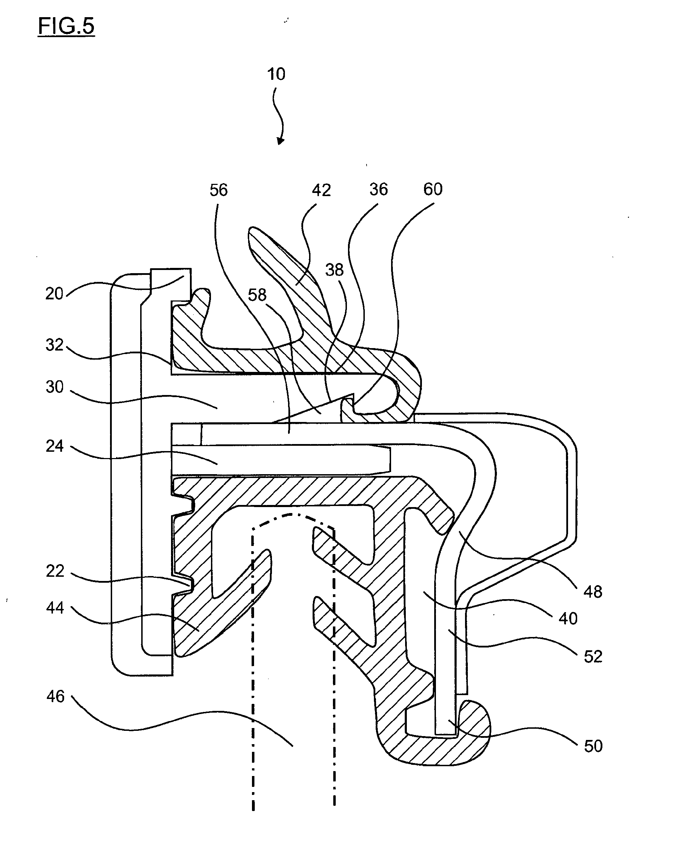

Comme cela est visible aux figures 4A et 4B, les moyens de fixation 30 du côté arrière, c'est-à-dire du côté opposé à la vitre, présentent une cavité de montage 58. Cette cavité de montage permet de venir accrocher un profilé 42 (visible à la figure 5). Les surépaisseurs conjuguées aux surfaces de montage permettent la fixation de profilés 42, 44. Par profilé on désigne des joints ou coulisses souples qui permettent d'effectuer l'étanchéité entre l'intérieur et l'extérieur tout en guidant et maintenant la vitre. Cette étanchéité peut être recherchée entre un ouvrant 4 et le châssis d'un véhicule 2, ou entre le cadre 12 d'un ouvrant 4 et une vitre. Les profilés utilisés dans ce contexte sont bien connus de l'homme de l'art et ne sont pas d'avantage développés ici.

Les pattes de fixation 30 comprennent une surface profilée en face de la nervure 56. Cette surface est représentée à la figure 4B. Elle comprend une première portion 34 contre laquelle la nervure 56 vient en appui, et une deuxième portion 38 formant une cavité 58 avec le profilé. Cette cavité 58 est destinée à recevoir un profilé d'étanchéité 42 tel qu'illustré à la figure 5. La deuxième portion 38 de la surface profilée comprend une surface à contact positif 60 destinée à coopérer avec le profilé d'étanchéité 42 illustré à la figure 5.

Le cadre 12 de l'ouvrant 4 comprend une paroi longitudinale 52. Cette surface est visible sur la figure 5. Cette paroi 52 est sensiblement verticale et orientée vers l'extérieur du véhicule 2. La paroi 52 est parallèle à la surface allongée 6. La paroi 52 est à distance de l'enjoliveur d'encadrement 6. Cet agencement permet de ménager une goulotte 40 apte à héberger un profilé 44. La paroi 52 offre un appui à la vitre.

Cette configuration de l'invention permet de monter des profilés 42, 44 qui ont préférentiellement une fonction de joint. Ces profilés 42, 44 sont logés dans des interstices et sont maintenus efficacement sans utilisation d'adhésifs, de moyens de montages particuliers. L'assemblage demande peu d'opérations.

Le profilé 42 se monte au contact de la patte de fixation 30. La base du profilé 42 est en appui sur un plan d'appui 36 de la patte de fixation 30. Cette base de profilé 42 procure un premier calage longitudinal. Le second calage longitudinal est fourni par le talon 20 qui offre une buté au joint 42. Un blocage latéral vers l'extérieur du profilé 42 est assuré par la face cachée 32. Le blocage latéral intérieur est permis par la cavité 58 et la zone à contact positif 38 dans et avec lesquelles s'enclipse le profilé 42. À ce niveau Le profilé 42 est généralement réalisé en matière souple, à l'endroit de la surface de montage il peut comprendre une armature renforcée pour augmenter son maintien. Toutes les caractéristiques décrites permettent un positionnement et un maintien adéquat au profilé 42.

Le profilé 44 dispose également d'un environnement permettant de le positionner et de le maintenir. Le profilé 44 repose sur la face cachée 32, qui lui procure un blocage latéral vers l'extérieur. La paroi 52 offre également un appui transversal pour le profilé 44. Le profilé repose également sur la patte de fixation 24. Avec sa souplesse il peut également venir en contact de la nervure 56. Entre la nervure et la paroi 50 est présent un renfoncement matérialisé par la portion 48. Contre cette portion 48 peut venir un appui du profilé 44. L'extrémité 50 de la paroi 52 constitue une surface de maintien pour le profilé 44. L'extrémité 50 permet de bloquer l'extrémité intérieure du profilé. La face cachée 32 comprend des renflements 22 à sa surface. Ces renflements 22 procurent un blocage du profilé et lui permettent de rester enfoncé dans la goulotte 40.

Le profilé 42, 44 se prolongent au niveau du gousset 8. Éventuellement le gousset 8 présente en sa partie intérieure des surépaisseurs, des surfaces fonctionnelles semblables à celles présentes sur l'enjoliveur d'encadrement 6.

De manière générale, la longueur de l'enjoliveur d'encadrement est supérieure à 30,00 cm ; préférentiellement supérieure à 50,00 cm ; encore plus préférentiellement supérieure à 80,00 cm.

Encore de manière générale, la largeur de l'enjoliveur d'encadrement est supérieure à 1,00 cm ; préférentiellement supérieure à 2,00 cm ; encore plus préférentiellement supérieure à 4,00 cm ; encore plus préférentiellement supérieure à 7,00 cm.

Toujours de manière générale, le gousset est un triangle qui comprend une hauteur supérieure à 5,00 cm ; préférentiellement supérieure à 10,00 cm ; encore plus préférentiellement supérieure à 20,00 cm.

## Revendications

1. Élément de finition (10) d'ouvrant (4) de véhicule (2), l'ouvrant (4) comprenant un cadre (12) dans lequel se loge une vitre (46), l'élément de finition (10) comprenant un gousset (8) et un enjoliveur d'encadrement (6) destiné à être monté sur le cadre (12) de l'ouvrant (4) qui comprend des moyens de fixations (24, 30) s'étendant le long de l'enjoliveur d'encadrement (6) de manière à pouvoir recevoir une nervure (56) du cadre (12) sur laquelle l'enjoliveur d'encadrement (6) est destiné à être monté, les moyens de fixation (24, 30) étant disposés de part et d'autre de la nervure (56) en s'étendant préférentiellement généralement parallèlement les uns aux autres, le gousset (8) et l'enjoliveur d'encadrement (6) étant d'un seul tenant, **caractérisé en ce que** les moyens de fixation (30) disposés d'un côté de la nervure (56) dudit cadre (12) comprennent une surface profilée comprenant une première portion (34) destinée à venir en contact avec la nervure (56) et une deuxième portion (38) apte à former avec la nervure (56) une cavité (58) destinée à la fixation d'un profilé (42) d'étanchéité, la deuxième portion (38) de la surface profilée comprenant préférentiellement une surface à contact positif (60) dans le sens de sortie de la cavité (58).

2. Élément de finition (10) suivant la revendication 1, **caractérisé en ce que** l'enjoliveur d'encadrement (6) comprend une face cachée (32) opposée à une partie visible de l'extérieur de l'élément de finition (10) une fois montée sur l'ouvrant (4) qui comprend un talon (20) longitudinal sur ladite face cachée (32), le talon (20) réalisant une butée qui combinée avec la surface à contact positif (60) de la surface profilée permet la fixation du profilé (42), le profilé (42) étant logé entre le talon (20), les moyens de fixation (30) et la face cachée (32).

3. Élément de finition (10) suivant la revendication 1 ou 2, **caractérisé en ce que** les moyens de fixation comprennent des pattes de fixation (24, 30) disposées le long de l'enjoliveur d'encadrement (6) et alternativement de part et d'autres de la nervure (56) du cadre (12) sur laquelle l'enjoliveur d'encadrement (6) est destiné à être monté.

4. Elément de finition (10) suivant la revendication précédente, **caractérisé en ce qu'**une partie des pattes (24) des moyens de fixation comprend un ou plusieurs orifices (26) aptes à coopérer par contact positif avec des moyens de fixation correspondant (28) de la nervure (56).

5. Élément de finition (10) suivant l'une quelconque des revendications précédentes, **caractérisé en ce que** l'élément de finition (10) est réalisé par bi-injection et reçoit un habillage (16) en PMMA et a préférentiellement un corps (18) en ABS.

6. Ouvrant (4) de véhicule (2) automobile, comprenant un cadre (12) dans lequel se loge une vitre (46), et un élément de finition, **caractérisé en ce que** l'élément de finition (10) est conforme à l'une des revendications 1 à 5, l'ouvrant (4) étant une porte ; préférentiellement une porte arrière ; l'élément de finition (10) étant préférentiellement positionné à l'arrière de la vitre (46).

7. Ouvrant (4) suivant la revendication 6, **caractérisé en ce que** le cadre (12) de l'ouvrant (4) est réalisé en tôle présentant une nervure (56) dans laquelle sont ménagés des moyens de fixation (28) aptes à coopérer par contact positif avec des orifices correspondants de l'élément de finition 10, préférentiellement la nervure (56) étant sensiblement orientée perpendiculairement au plan de la vitre (46).

8. Ouvrant (4) suivant la revendication 7, **caractérisé en ce que** les moyens de fixation (28) comprennent au moins une portion de la nervure (56) partiellement découpée et déformée, la découpe étant préférentiellement en forme générale de U avec l'ouverture du U opposée au sens de montage.

## Patentansprüche

1. Abschlusselement (10) eines Öffnungselements (4) eines Fahrzeugs (2), wobei das Öffnungselement (4) einen Rahmen (12) aufweist, in den sich eine Fensterscheibe (46) fügt, wobei das Abschlusselement (10) ein Eckblech (8) und einen Zierrahmen (6) aufweist, der dazu bestimmt ist, auf den Rahmen (12) des Öffnungselements (4) montiert zu werden, das Befestigungsmittel (24, 30) aufweist, die sich entlang des Türrahmens (6) derart erstrecken, dass sie eine Rippe (56) des Rahmens (12) aufnehmen können, auf der der Zierrahmen (6) montiert werden soll, wobei die Befestigungsmittel (24, 30) zu beiden Seiten der Rippe (56), die sich vorzugsweise allgemein parallel zueinander erstrecken, angeordnet sind, wobei das Eckblech (8) und der Zierrahmen (6) aus einem Stück bestehen, **dadurch gekennzeichnet, dass** die Befestigungsmittel (30), die auf einer Seite der Rippe (56) des Rahmens (12) angeordnet sind, eine Profiloberfläche aufweisen, die einen ersten Teil (34) aufweist, der dazu bestimmt ist, mit der Rippe (56) in Berührung zu kommen, und einen zweiten Teil (38), der geeignet ist, um mit der Rippe (56) einen Hohlraum (58), der zur Befestigung eines Abdichtprodukts (42) bestimmt ist, zu bilden, wobei der zweite Teil (38) der Profiloberfläche vorzugsweise eine positive Berührungsoberfläche (60) in die Ausgangsrichtung des Hohlraums (58) aufweist.

2. Anschlusselement (10) nach Anspruch 1, **dadurch gekennzeichnet, dass** der Zierrahmen (6) eine verborgene Seite (32) aufweist, die einem Teil gegenüber liegt, der von außerhalb des Abschlusselements (10) nach der Montage auf das Öffnungselement (4) sichtbar ist, das einen Längsabsatz (20) auf der verborgenen Seite (32) aufweist, wobei der Absatz (20) einen Anschlag bildet, der, mit der schlüssigen Berührungsoberfläche (60) der Profiloberfläche kombiniert, das Befestigen des Profils (42) erlaubt, wobei das Profil (42) zwischen dem Absatz (20), den Befestigungsmitteln (30) und der verborgenen Seite (32) untergebracht ist.

3. Abschlusselement (10) nach Anspruch 1 oder 2, **dadurch gekennzeichnet, dass** die Befestigungsmittel Befestigungspratzen (24, 30) aufweisen, die entlang des Zierrahmens (6) und abwechselnd auf jeder Seite der Rippe (56) des Rahmens (12), auf den der Zierrahmen (6) montiert werden soll, angeordnet sind.

4. Abschlusselement (10) nach dem vorhergehenden Anspruch, **dadurch gekennzeichnet, dass** ein Teil der Pratzen (24) der Befestigungsmittel eine oder mehrere Öffnungen (26) aufweist, die geeignet sind, um durch schlüssige Berührung mit den entsprechenden Befestigungsmitteln (28) der Rippe (56) zusammenzuwirken.

5. Abschlusselement (10) nach einem der vorhergehenden Ansprüche, **dadurch gekennzeichnet, dass** das Abschlusselement (10) durch Doppelspritzguss hergestellt ist und eine Verkleidung (16) aus PMMA erhält und vorzugsweise einen Körper (18) aus ABS aufweist.

6. Öffnungselement (4) eines Kraftfahrzeugs (2), das einen Rahmen (12) aufweist, in den sich eine Fensterscheibe (46) fügt, und ein Abschlusselement, **dadurch gekennzeichnet, dass** das Abschlusselement (10) einem der Ansprüche 1 bis 5 entspricht, wobei das Öffnungselement (4) eine Tür ist, vorzugsweise eine Hecktür, wobei das Abschlusselement (10) vorzugsweise an der Rückseite der Fensterscheibe (46) positioniert ist.

7. Öffnungselement (4) nach Anspruch 6, **dadurch gekennzeichnet, dass** der Rahmen (12) des Öffnungselements (4) aus Blech hergestellt ist, das eine Rippe (56) aufweist, in der Befestigungsmittel (28) eingerichtet sind, die geeignet sind, um durch schlüssige Berührung mit entsprechenden Öffnungen des Abschlusselements (10) zusammenzuwirken, wobei die Rippe (56) vorzugsweise senkrecht zu der Ebene der Fensterscheibe (46) ausgerichtet ist.

8. Öffnungselement (4) nach Anspruch 7, **dadurch gekennzeichnet, dass** die Befestigungsmittel (28) mindestens einen Teil der Rippe (56), der teilweise ausgeschnitten und verformt ist, aufweisen, wobei der Schnitt vorzugsweise eine allgemeine U-Form mit der Öffnung des U der Montagerichtung entgegengesetzt aufweist.

## Claims

1. A finishing element (10) of an opening panel (4) of a vehicle (2), the opening panel (4) including a frame (12) in which a glass pane (46) is housed, the finishing element (10) including a gusset (8) and a frame trim (6) intended to be mounted on the frame (12) of the opening panel (4) which includes fixing means (24, 30) extending along the frame trim (6) so as to be able to receive a rib (56) of the frame (12) on which the frame trim (6) is intended to be mounted, the fixing means (24, 30) being disposed on either side of the rib (56), extending preferably generally parallel to one another, the gusset (8) and the frame trim (6) being of one piece, **characterized in that** the fixing means (30) disposed on one side of the rib (56) of the said frame (12) include a profiled surface including a first portion (34) intended to come in contact with the rib (56) and a second portion (38) able to form with the rib (56) a cavity (58) intended for the fixing of a sealing profile (42), the second portion (38) of the profiled surface preferably including a positive contact surface (60) in the outlet direction of the cavity (58).

2. The finishing element (10) according to Claim 1, **characterized in that** the frame trim (6) includes a concealed face (32) opposed to a part visible from the exterior of the finishing element (10) once mounted on the opening panel (4) which includes a longitudinal flange (20) on the said concealed face (32), the flange (20) forming a stop which, combined with the positive contact surface (60) of the profiled surface permits the fixing of the profile (42), the profile (42) being housed between the flange (20), the fixing means (30) and the concealed face (32).

3. The finishing element (10) according to Claim 1 or 2, **characterized in that** the fixing means include fixing lugs (24, 30) disposed along the frame trim (6) and alternately on either side of the rib (56) of the frame (12) on which the frame trim (6) is intended to be mounted.

4. The finishing element (10) according to the preceding claim, **characterized in that** a portion of the lugs (24) of the fixing means includes one or several orifices (26) able to cooperate by positive contact with corresponding fixing means (28) of the rib (56).

5. The finishing element (10) according to any one of the preceding claims, **characterized in that** the finishing element (10) is realized by bi-injection and receives a covering (16) of PMMA and preferably has a body (18) of ABS.

6. An opening panel (4) of a motor vehicle (2), including a frame (12) in which a glass pane (46) is housed, and a finishing element, **characterized in that** the finishing element (10) is in accordance with one of Claims 1 to 5, the opening panel (4) being a door; preferably a rear door; the finishing element (10) being preferably positioned at the rear of the glass pane (46).

7. The opening panel (4) according to Claim 6, **characterized in that** the frame (12) of the opening panel (4) is realized from sheet metal having a rib (56) in which are arranged fixing means (28) able to cooperate by positive contact with corresponding orifices of the finishing element (10), preferably the rib (56) being substantially oriented perpendicularly to the plane of the glass pane (46).

8. The opening panel (4) according to Claim 7, **characterized in that** the fixing means (28) include at least a portion of the rib (56) partially cut out and deformed, the cutout being preferably in a general U-shape, with the opening of the U opposed to the mounting direction.
